# FASCICULE DE BREVET EUROPEEN

(11) **EP 0 488 100 B1**
(45) Date de publication et mention de la délivrance du brevet: **11.01.1995**
(21) Numéro de dépôt: 91120040.0
(22) Date de dépôt: 25.11.1991
(51) Int. Cl.: F16K 31/08

(54) **Vanne manuelle étanche**
Dichtes Handventil
Tight manual valve

(30) Priorité: 26.11.1990 FR 9014751
(43) Date de publication de la demande: 03.06.1992
(73) Titulaire: ALCATEL CIT, 75008 Paris (FR)
(72) Inventeur: Perrillat-Amédé, Denis, F-74940 Annecy le Vieux (FR)
(74) Mandataire: Weinmiller, Jürgen

(56) Documents cités:
- DE-A- 2 028 591
- DE-A- 3 014 692
- US-A- 2 609 669
- US-A- 2 792 194
- PATENT ABSTRACTS OF JAPAN vol. 12, no. 437 (M-765)(3284), 17 novembre 1988; & JP - A - 63172076 (MITSUE YAMADA) 15.07.1988

## Description

La présente invention concerne une vanne manuelle étanche comprenant un corps de vanne cylindrique comportant un premier orifice et un second orifice et comprenant intérieurement un clapet-piston, immobile en rotation et pouvant se mouvoir axialement entre une position fermée obturant ledit premier orifice et une position ouverte laissant une libre communication entre ledit premier orifice et ledit second orifice.

Une telle vanne est par exemple utilisée dans des circuits de vide ou des circuits gazeux, comme vanne d'entrée d'air, ou comme vanne de sécurité sur des canalisations, etc.....

Une vanne connue de ce type, à commande manuelle, comprend pour la commande de la translation du clapet, une vis de commande qui traverse un trou taraudé réalisé dans le fond opposé audit premier orifice et qui est liée au clapet par une "tête" circulaire prise dans une rainure en T du clapet, l'autre extrémité de la vis comportant une tête de manoeuvre. L'étanchéité du corps de vanne est réalisée par un soufflet métallique joignant le clapet-piston au fond du corps de vanne traversé par ladite vis de commande.

La manoeuvre d'une telle vanne est relativement lente puisqu'il faut effectuer plusieurs tours de vis pour fermer la vanne. En outre, une telle vanne est relativement coûteuse à cause du soufflet métallique.

La présente invention a pour but de pallier ces inconvénients et propose une vanne économique et à manoeuvre rapide.

L'invention a ainsi pour objet une vanne manuelle étanche comprenant un corps de vanne cylindrique comportant un premier orifice et un second orifice et comprenant intérieurement un clapet-piston immobile en rotation et pouvant se mouvoir axialement entre une position fermée obturant ledit premier orifice et une position ouverte laissant une libre communication entre ledit premier orifice et ledit second orifice (voir par exemple DE-A-3014692), caractérisée en ce que ledit corps est équipé d'une bague de commande entourant extérieurement le corps de vanne, immobile axialement et libre en rotation, ladite bague ainsi que le clapet-piston étant équipés, chacun, d'au moins une paire d'aimants permanents polarisés axialement, les deux aimants de la paire étant polarisés en sens inverse l'un de l'autre et étant situés respectivement sur deux génératrices diamétralement opposées de l'organe, corps ou clapet, qui les porte.

Selon une réalisation préférée, ladite bague de commande est équipée de deux dites paires d'aimants permanents, situés dans le prolongement l'une de l'autre sur les mêmes génératrices, le sens d'aimantation des deux paires étant opposé l'une à l'autre.

On va maintenant donner la description de deux exemples de mise en oeuvre de l'invention en se reportant au dessin annexé dans lequel :
La figure 1 représente, selon une première réalisation, une vanne selon l'invention, en position ouverte.
La figure 2 montre la vanne de la figure 1 en position fermée.
Les figures 3 et 4 représentent respectivement en position ouverte et fermée une vanne selon l'invention dans un second mode de réalisation de l'invention.

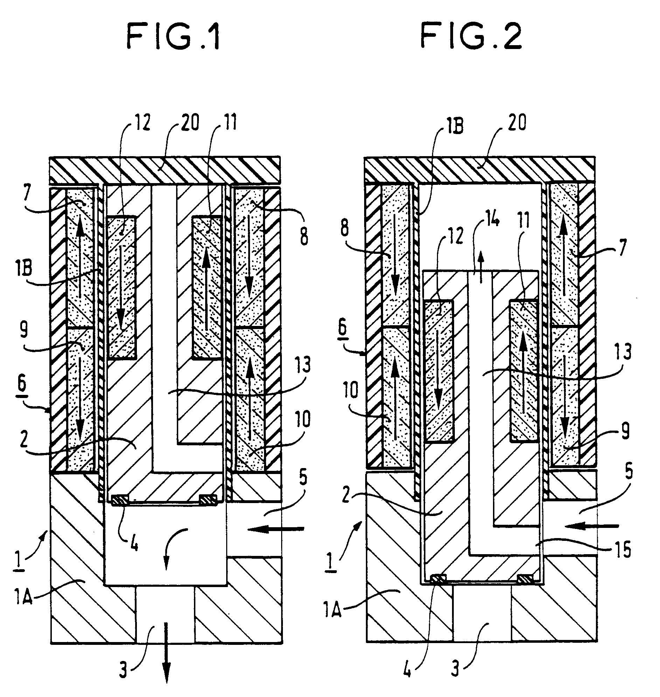

Ainsi, en se reportant aux figures, on voit une vanne manuelle étanche, selon l'invention, qui comprend un corps de vanne 1 cylindrique dans lequel est situé un clapet-piston 2 mobile axialement. Le corps comporte un premier orifice 3 réalisé dans l'un des deux fonds du corps de vanne. En position fermée, comme représenté sur la figure 2, l'orifice 3 est obturé, le clapet-piston 2 comportant un joint d'étanchéité 4. Le corps de vanne 1 comporte un second orifice 5 réalisé dans la paroi latérale du corps de vanne. Cet orifice 5 est situé de telle façon qu'il soit dégagé par le clapet-piston 2 lorsque la vanne est ouverte, comme on le voit sur la figure 1. A part ces deux orifices 3 et 5, le corps de vanne est complètement fermé et aucune pièce mobile ne le traverse. Il est effectué en deux parties 1A et 1B assemblées.

Le corps de vanne 1, dans sa partie 1B, est pourvu d'une bague de commande 6 qui entoure extérieurement cette partie 1B et qui est libre en rotation. Axialement, elle est immobilisée entre la partie 1A du corps et le fond 20 de la partie 1B du corps. La bague de commande 6 est équipée d'une première paire d'aimants 7 et 8 polarisés axialement et en sens inverse l'un de l'autre, comme le figurent les flèches. Ces deux aimants sont respectivement situés sur deux génératrices diamétralement opposées de la bague de commande. Au-dessous de cette première paire d'aimants est disposée une seconde paire d'aimants permanents 9 et 10. L'aimant 9 est polarisé en sens inverse de l'aimant 7, et l'aimant 10 en sens inverse de l'aimant 8.

Le clapet-piston est également équipé d'une paire d'aimants permanents 11 et 12 également polarisés axialement en sens inverse l'un de l'autre et disposés à 180° l'un de l'autre.

Enfin, le clapet 2 est percé intérieurement d'un canal 13 qui débouche d'une part en 14 dans le fond du clapet du côté du fond opposé à l'orifice 3, et d'autre part en 15 sur sa paroi latérale au voisinage de son fond opposé.

Le but de ce canal 14 est d'éviter, lors de l'ouverture de la vanne d'emprisonner un "coussin de gaz" entre le fond du clapet et le fond 20 du corps de vanne qui ne s'évacuerait que lentement le long de la paroi latérale cylindrique du clapet et qui retarderait ainsi l'ouverture complète de la vanne.

Le fonctionnement de la vanne s'effectue en tournant d'un demi-tour la bague de commande 6 pour passer d'une position à l'autre : ouverte-fermée ou fermée-ouverte.

Dans la figure 1, la paire d'aimants 7, 8 attire la paire 11, 12 du clapet, tandis que la paire 9, 10 la repousse. Dans la figure 2, la paire d'aimants 9, 10 attire la paire 11, 12 du clapet, tandis que la paire 7, 8 la repousse.

Dans l'exemple représenté, la bague 6 de commande comporte deux paires d'aimants permanents, ce qui n'est pas indispensable, mais procure une plus grande force d'application du clapet contre le siège de l'orifice de fermeture.

Bien entendu, la partie 1B du corps de vanne 1 autour de laquelle est située la bague de commande 6 est en matériau amagnétique.

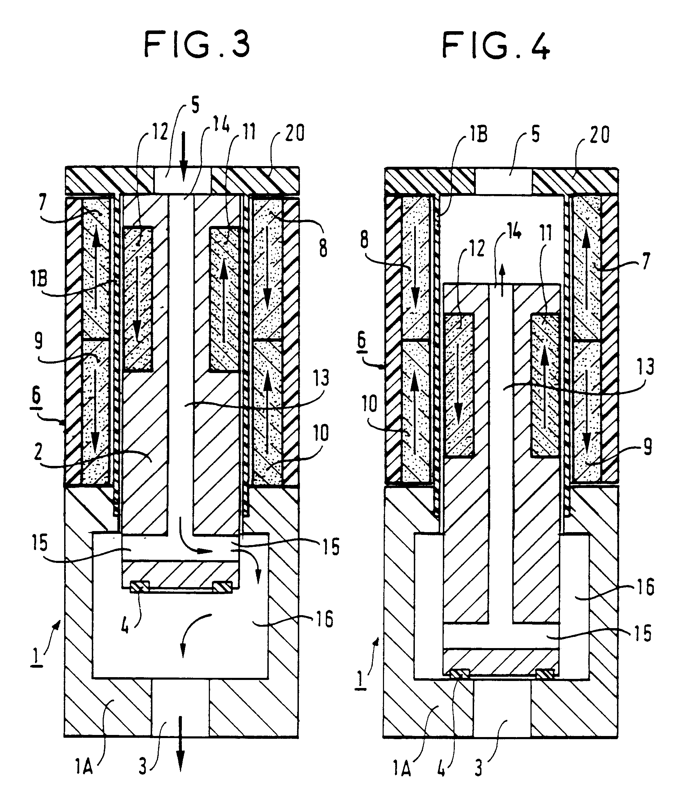

Dans la variante représentée figures 3 et 4 les orifices 3 et 5 sont respectivement pratiqués dans les fonds opposés du corps 1. Afin d'assurer la libre communication entre les deux orifices 3 et 5 en position ouverte de la vanne, le clapet-piston comporte un canal interne (13) débouchant d'une part en 14 sur son fond en regard de l'orifice 5 et d'autre part en 15 sur sa paroi latérale au voisinage du fond situé du côté du premier orifice 3. Les deux orifices latéraux 15 aboutissent dans une cavité élargie 16 de corps 1 de façon à assurer une bonne conductance de la vanne dans sa position ouverte.

## Revendications

1. Vanne manuelle étanche comprenant un corps de vanne (1) cylindrique comportant un premier orifice (3) et un second orifice (5) et comprenant intérieurement un clapet-piston (2) immobile en rotation et pouvant se mouvoir axialement entre une position fermée obturant ledit premier orifice et une position ouverte laissant une libre communication entre ledit premier orifice et ledit second orifice, caractérisée en ce que ledit corps est équipé d'une bague de commande (6) entourant extérieurement le corps de vanne, immobile axialement et libre en rotation, ladite bague ainsi que le clapet-piston étant équipés, chacun, d'au moins une paire d'aimants permanents (7, 8, 11, 12) polarisés axialement, les deux aimants de la paire étant polarisés en sens inverse l'un de l'autre et étant situés respectivement sur deux génératrices diamétralement opposées de l'organe, corps ou clapet, qui les porte.

2. Vanne manuelle étanche selon la revendication 1, caractérisée en ce que ladite bague de commande (6) est équipée de deux dites paires d'aimants permanents (7, 8, 9, 10), situées dans le prolongement l'une de l'autre sur les mêmes génératrices, le sens d'aimantation des deux paires étant opposé l'une à l'autre.

3. Vanne manuelle étanche selon l'une des revendications 1 ou 2, caractérisée en ce que ledit premier orifice (3) est situé dans l'un des deux fonds dudit corps, ledit second orifice (5) étant situé dans la paroi latérale.

4. Vanne manuelle étanche selon la revendication 3, caractérisée en ce que ledit clapet-piston comporte un canal interne (13) qui débouche à l'extérieur du clapet d'une part sur son fond situé du côté opposé audit premier orifice (3), et d'autre part sur sa paroi latérale au voisinage du fond situé du côté dudit premier orifice.

5. Vanne manuelle étanche selon l'une des revendications 1 ou 2, caractérisée en ce que ledit premier orifice (3) est situé dans l'un des deux fonds dudit corps, tandis que le second orifice (5) est situé dans le fond opposé (20), ledit clapet-piston (2) comportant un canal interne (13) qui débouche à l'extérieur du clapet d'une part sur son fond en regard du second orifice (5) et d'autre part sur sa paroi latérale au voisinage du fond situé du côté dudit premier orifice (3) dans une cavité élargie (16) dudit corps.

## Claims

1. A gastight manually-operated valve comprising a cylindrical valve body (1) including a first orifice (3) and a second orifice (5), and containing a piston valve-member (2) that is prevented from rotating but that is free to move axially between a closed position closing said first orifice and an open position providing free communication between said first orifice and said second orifice, the valve being characterized in that said body is provided with a control ring (6) surrounding the outside of the valve body, prevented from moving axially, and free to move in rotation, both said control ring and said piston valve member being fitted with at least one pair of axially polarized permanent magnets (7, 8, 11, 12), with the two magnets in each pair being polarized in opposite directions to each other and extending respectively on two diametrically opposite generator lines of the body or valve member part carrying them.

2. A gastight manually-controlled valve according to claim 1, characterized in that said control ring (6) is fitted with two pairs of permanent magnets (7, 8, 9, 10) situated in line with each other on the same generator lines, and with the magnetization directions of the two pairs being opposite to each other.

3. A gastight manually-controlled valve according to claim 1 or 2, characterized in that said first orifice (3) is situated in one of the two end walls of said body, said second orifice (5) being situated in the side wall.

4. A gastight manually-controlled valve according to claim 3, characterized in that said piston valve member includes an internal channel (13) which opens to the outside of the valve member firstly through its end that is situated furthest from said first orifice (3) and secondly through its side wall in the vicinity of its end situated adjacent to said first orifice.

5. A gastight manually-controlled valve according to claim 1 or 2, characterized in that said first orifice (3) is situated in one of the two ends of said body, and said second orifice (5) is situated in the opposite end (20) thereof, said piston valve member (2) having an internal channel (13) which opens to the outside of the valve member firstly through its end facing the second orifice (5) and secondly through its side wall in the vicinity of its end situated adjacent to said first orifice (3) in an enlarged cavity (16) of said body.

## Patentansprüche

1. Handbetätigtes dichtes Ventil mit einem zylindrischen Ventilkörper (1), der eine erste (3) und eine zweite Öffnung (5) aufweist und innen einen drehfesten Ventilschieber (2) besitzt, der sich axial zwischen einer geschlossenen Stellung, in der er die erste Öffnung verschließt, und einer offenen Stellung bewegen kann, in der er zwischen der ersten und der zweiten Öffnung eine freie Verbindung läßt, dadurch gekennzeichnet, daß der Körper mit einem Steuerring (6) ausgestattet ist, der den Ventilkörper außen umgibt, axial fest, aber drehbeweglich ist, wobei dieser Ring sowie der Ventilschieber je mindestens ein Paar von Dauermagneten (7, 8, 11, 12) besitzen, die axial polarisiert sind, wobei die beiden Magneten des Paars in zueinander entgegengesetzter Richtung polarisiert sind und sich je auf einer von zwei einander diametral entgegengesetzt liegenden Mantellinien des sie tragenden Organs, nämlich des Körpers oder des Ventilschiebers, befinden.

2. Handbetätigtes dichtes Ventil nach Anspruch 1, dadurch gekennzeichnet, daß der Steuerring (6) zwei solchen Paaren von Dauermagneten (7, 8, 9, 10) aufweist, die sich in der Verlängerung zueinander auf den gleichen Mantellinien befinden, wobei die Magnetrichtung der beiden Paare einander entgegengesetzt ist.

3. Handbetätigtes dichtes Ventil nach einem der Ansprüche 1 oder 2, dadurch gekennzeichnet, daß die erste Öffnung (3) sich in einem der beiden Böden des Körpers befindet, während die zweite Öffnung (5) in der Seitenwand angeordnet ist.

4. Handbetätigtes dichtes Ventil nach Anspruch 3, dadurch gekennzeichnet, daß der Ventilschieber einen inneren Kanal (13) aufweist, der außerhalb des Ventilschiebers einerseits auf seinem der ersten Öffnung (3) entfernten Boden und andererseits auf seiner Seitenwand in der Nähe des der ersten Öffnung nahen Bodens mündet.

5. Handbetätigtes dichtes Ventil nach einem der Ansprüche 1 oder 2, dadurch gekennzeichnet, daß die erste Öffnung (3) sich in einem der beiden Böden des Körpers befindet, während die zweite Öffnung (5) sich im entgegengesetzten Boden (20) befindet, wobei der Ventilschieber (2) einen inneren Kanal (13) aufweist, der einerseits in dessen Boden vor der zweiten Öffnung (5) und andererseits in seiner Seitenwand in der Nähe des der ersten Öffnung (3) nahen Bodens in einen erweiterten Hohlraum (16) des Körpers mündet.
